(19) Europäisches Patentamt
European Patent Office
Office européen des brevets

(11) **EP 3 975 017 A1**

(12) **EUROPÄISCHE PATENTANMELDUNG**

(43) Veröffentlichungstag:
**30.03.2022 Patentblatt 2022/13**

(21) Anmeldenummer: **20199047.0**

(22) Anmeldetag: **29.09.2020**

(51) Internationale Patentklassifikation (IPC):
**G06F 21/52** (2013.01)   **G06F 11/07** (2006.01)

(52) Gemeinsame Patentklassifikation (CPC):
**G06F 21/52; G06F 11/0796**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Witte, Karl-Hermann**
**90768 Fürth (DE)**

(54) **VERFAHREN ZUR PROTOKOLLIERUNG EINER VIELZAHL VON EREIGNISSEN IN EINER CODIERTEN TRACER-VARIABLEN IN EINEM SICHERHEITSGERICHTETEN COMPUTERPROGRAMM**

(57) Die Erfindung betrifft ein Verfahren, eine Einrichtung und ein Computerprogramm zur Protokollierung einer Vielzahl an Ereignissen in einer codierten Tracer-Variablen ($Tracer_c$) in einem sicherheitsgerichteten Computerprogramm, wobei jedes Ereignis als Wert in der codierten Tracer-Variable ($Tracer_c$) protokolliert wird. Dabei wird für eine gleichzeitige Protokollierung mehrerer Ereignisse aus den Werten für diese Ereignisse zuerst ein Gesamtwert errechnet, der danach in der codierten Tracer-Variable ($Tracer_c$) protokolliert wird. Das hat den Vorteil, dass eine gleichzeitige Verarbeitung mehrerer unabhängiger Konsistenzkriterien zur Erfassung und Propagation von Fehlern oder anderen Ereignissen möglich ist. Durch die Gleichzeitigkeit werden viele dynamische Effekte bei der Erfassung und Propagation von Fehlern / Ereignissen vermieden. Dies ermöglicht die notwendige Reduktion der Komplexität von Sicherheitsprogrammen.

**Beschreibung**

Die Erfindung betrifft ein Verfahren zur Protokollierung einer Vielzahl Ereignissen in einer codierten Tracer-Variablen in einem sicherheitsgerichteten Computerprogramm gemäß dem Oberbegriff des Patentanspruchs 1, eine Einrichtung zur Durchführung des Verfahrens gemäß dem Oberbegriff des Patentanspruchs 9, und ein Computerprogrammprodukt zur Durchführung des Verfahrens gemäß dem Oberbegriff des Patentanspruchs 10.

In sicherheitsgerichteten Programmen für industrielle Anwendungen, die typischerweise auf eingebetteter Hardware wie z.B. Speicherprogrammierbaren Steuerungen (SPS) oder anderen industriellen Automatisierungskomponenten ablaufen, muss sichergestellt werden, dass Bitfehler in Variablen erkannt werden und dass zur Abarbeitung in einem Zyklus vorgesehene Programmteile auch tatsächlich vollständig durchlaufen werden.

Bei der Verarbeitung funktional sicherer Daten müssen interne Fehler der Sicherheitsfunktion erkannt werden und eine Sicherheitsreaktion (z.B. Ausgabe sicherer Ersatzwerte oder einer Warnmeldung) zur Folge haben. Dies wird klassischerweise durch Hardware-Replikation und Ergebnisvergleich erreicht. Eine Alternative ist die Kodierung der Sicherheitsfunktion mittels arithmetischen Kodes. Einfache arithmetische Kodes erkennen nicht alle Fehler und müssen geeignet ergänzt werden. Dies führt typischerweise zu erheblichem Aufwand und/oder schränkt die Verwendung ein.

In fortgeschritteneren sicherheitsgerichteten Lösungen wird eine Hardware-unabhängige Variante von Coded-Processing verwendet. In Coded-Processing erfolgt die Erfassung und Propagation von Fehlerinformation in jeder Variablen. Dies führt bisher dazu, dass komplexe Anwendungen oft nicht angemessen abgebildet werden können.

Es besteht also ein Bedarf für ein Verfahren mit linearer Komplexität zur Erfassung und Propagation von Fehlern in komplexen Softwaresystemen für die sicherheitsgerichtete Programmierung mittels arithmetischer Codes.

Beispiele für komplexe Anwendungen:

- Asynchrone Änderung von Daten (z.B. Bedienungen durch HMI - Human Machine Interface)

- Remanente Daten

- Verschachtelte Programme (IF-THEN-ELSE, LOOP, ...)

- Globale Daten

- CIR (Change in Run - Programm- oder Ablaufänderungen zur Laufzeit)

- Cloud-basierte Safety-Anwendungen

Nach dem gegenwärtigen Stand der Technik gibt es folgende Lösungsstrategien:

- Redundanz/Diversität: Das Sicherheitsprogramm wird mehrfach unabhängig ausgeführt, so dass "Common Causes" (gleiche Fehlerursachen) ausgeschlossen werden können. Dieser Ansatz erfordert abhängig von der Komplexität der Anwendung einen erheblichen Aufwand für die Synchronisation der Abläufe und für die sichere Erfassung der Fehler.

- Bei "Distributed Safety" wird auf Basis des HW-Modells zu den CPUs, auf denen das Sicherheitsprogramm abläuft, die tatsächlich zu erwartende Fehlerrate abgeschätzt. Die Abschätzung und die Festlegung des Modells müssen für jede HW gesondert erfolgen.

- Dynamische Signatur für jede Variable: Jede Variable erhält eine dynamische Signatur. Diese Signatur wird bei jeder Änderung der Variable geändert. Der Aufwand für die Verwaltung der dynamischen Signatur wächst mit der Komplexität des Anwenderprogramms. Breits bei einzelnen Anwendungen hat sich der Aufwand für die Verwaltung durch kleine Änderungen in der Kontrollstruktur verdoppelt.

Zusammenfassend kann man sagen, dass die Lösungsansätze nach dem Stand der Technik mit der aktuell stark wachsenden Komplexität der Anforderungen immer weniger als alleinige Lösung für neue Innovationen geeignet sind. Sie müssen um Maßnahmen zur Beherrschung der Komplexität ergänzt werden.

Ein Problem besteht darin, dass Zustände, Zustandsänderungen, Protokollinformation (insbesondere über den Programmlauf), Fehlerinformationen oder dergleichen, im Folgenden kurz "Ereignisse" oder "Kriterien" genannt, die synchron bzw. zeitnah zueinander auftreten, oft nicht zeitnah oder zeitgleich in einer Protokollvariablen (im Folgenden "Tracer-Variable" genannt) protokolliert werden. Das liegt oft daran, dass entsprechende in einem Source-Code zusammenhängende Befehle in einem Computerprogramm nach dem Compilieren zeitlich getrennt voneinander ausgeführt werden können, oder dass beispielsweise zwischenzeitlich eine Unterbrechung (Interrupt) in der Programmausführung auftritt. Dadurch können inkonsistente Zustände, insbesondere für die Tracer-Variable und davon abhängige Strukturen (insbesondere Kontrollstrukturen), auftreten. Es ist also eine Aufgabe der vorliegenden Erfindung, die Protokollierung von Ereignissen in Tracer-Variablen zu verbessern.

Die Aufgabe wird prinzipiell dadurch gelöst, dass die Absicherung analog zur arithmetischen Kodierung erfolgt. Innerhalb einer Tracer-Variablen werden mehrere Ereignisse ("Kriterien") unabhängig voneinander gespeichert. Für jedes Kriterium ist der Wert arithmetisch kodiert im "Tracer" gespeichert, wobei erfindungsgemäß mehrere Kriterien oder Ereignisse zunächst zusammengefasst und dann in einem Rechenschritt und somit zeitgleich in der Tracer-Variablen gespeichert werden.

Die Aufgabe wird insbesondere durch ein Verfahren gemäß Patentanspruch 1, eine Einrichtung gemäß Patentanspruch 9 und durch ein Computerprogramm gemäß Patentanspruch 10 gelöst.

Dabei wird ein Verfahren zur Protokollierung einer Vielzahl Ereignissen in einer codierten Tracer-Variablen in einem sicherheitsgerichteten Computerprogramm vorgeschlagen, wobei jedes Ereignis in Form eines Wertes in der codierten Tracer-Variable protokolliert wird. Dabei wird für eine gleichzeitige Protokollierung mehrerer Ereignisse aus den Werten für diese Ereignisse zuerst ein Gesamtwert errechnet, der danach in der codierten Tracer-Variable protokolliert wird. Das hat den Vorteil, dass eine gleichzeitige Verarbeitung mehrerer unabhängiger Konsistenzkriterien zur Erfassung und Propagation von Fehlern oder anderen Ereignissen möglich ist. Durch die Gleichzeitigkeit werden viele dynamische Effekte bei der Erfassung und Propagation von Fehlern / Ereignissen vermieden. Dies ermöglicht die notwendige Reduktion der Komplexität von Sicherheitsprogrammen.

Außerdem wird zur Lösung der Aufgabe eine Einrichtung und eine Computerprogrammprodukt zur Protokollierung einer Vielzahl Ereignissen in einer codierten Tracer-Variablen in einem sicherheitsgerichteten Computerprogramm gelöst, wobei die Einrichtung bzw. das Computerprogrammprodukt bei seiner Ausführung zur Durchführung des o.g. Verfahrens eingerichtet sind. Damit lassen sich die anhand des Verfahrens erläuterten Vorteile erzielen.

Vorteilhafte Varianten des erfindungsgemäßen Verfahrens sind in den abhängigen Patentansprüchen angegeben, deren Merkmale und Vorteile sinngemäß auch für die erfindungsgemäße Einrichtung und das Computerprogrammprodukt gelten.

In einer vorteilhaften Variante Verfahren wird zur Codierung der codierten Variablen eine AN-, ANB-, oder ANBD-Codierung verwendet. Diese Codierungen sind in sicherheitsgerichteten Computerprogrammen, insbesondere in solchen der der Automatisierungstechnik, erfolgreich eingeführt.

In einer ersten vorteilhaften Variante werden die Ereignisse als codierter Wert in der codierten Tracer-Variable protokolliert, während in einer weiteren vorteilhaften Variante die Ereignisse in einer Signatur der codierten Tracer-Variable protokolliert werden. Mischformen sind möglich, indem beispielsweise erste Ereignisse in der "Payload", also als Wert, und andere Ereignisse in der Signatur protokolliert werden.

Vorteilhaft wird für jedes Ereignis eine Konstante definiert, wobei diese Konstante den Wert für das Zutreffen des Ereignisses darstellt. So wird beispielsweise eine Boole'sche Information (true/false) auf einen breiten Bitwert abgebildet, bei dem nur genau ein Wert dem "true" entspricht, was die Sicherheit bei Bitfehlern erhöht.

In einer vorteilhaften Ausgestaltung wird durch das Computerprogramm eine Konsistenzprüfung der Tracer-Variablen durchgeführt, wobei zumindest im Falle einer Inkonsistenz eine Fehlerbehandlung durchgeführt wird. So ist eine Fehlerbehandlung möglich.

Wenn jedes Ereignis oder ein jeder Typ eines Ereignisses mit einer eigenen Konstante codiert wird, wobei die Konstanten der verschiedenen Ereignisse bzw. der verschiedenen Typen zueinander teilerfremd gewählt werden, können mehrere Ereignisse oder Typen von Ereignissen in einer gemeinsamen codierten Variablen, der Tracer-Variablen (oder "Fehler-Variablen") protokolliert werden.

Vorteilhaft wird mit dem Ereignis jeweils ein Erwartungswert für das Ereignis in der codierten Tracer-Variable protokolliert. Damit können Fehler, beispielsweise Programmlauf-Fehler, allein durch Auswertung der Tracer-Variablen festgestellt werden, ohne einen Vergleich des Inhaltes der Tracer-Variablen mit extern gespeicherten Erwartungswerten vornehmen zu müssen.

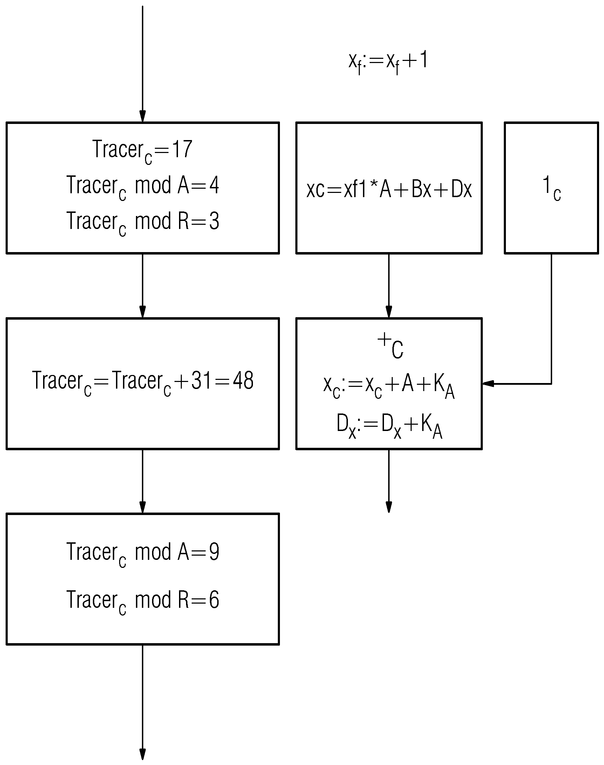

Ein Ausführungsbeispiel des erfindungsgemäßen Verfahrens wird nachfolgend anhand der Zeichnung erläutert. Es dient gleichzeitig zur Erläuterung eines Ausführungsbeispiels einer erfindungsgemäßen Einrichtung und eines ebensolchen Computerprogrammproduktes.

Dabei zeigt die einzige Figur die Sicherung einer Addition zu einer codierten Variablen und gleichzeitig die Sicherung der Abarbeitung eines Programmabschnittes.

Zur Kontrolle eines Programmlaufes und zur Protokollierung von Ereignissen aller Art werden im Stand der Technik Laufvariablen, sog. Tracer-Variablen oder kurz "Tracer", eingesetzt, mit deren Inhalt der durchlaufene Programmpfad oder das Eintreffen von Kriterien, Ereignissen, Zuständen oder dgl. protokolliert und somit überprüft werden kann. Im vorliegenden Beispiel wird die Tracer-Variable $Tracer_c$ für die Absicherung einer Addition und für das gleichzeitige Abarbeiten eines Programmabschnittes des Computerprogramms verwendet.

Das vorliegende Beispiel zeigt dazu die codierte Variable $x_c$. Im vorliegenden Beispiel ist ohne Beschränkung der Allgemeinheit die Variable $x_c$ nach einer Vorschrift ANBD-codiert in der Form:

$$X_c \; := \; X_f \star A \; + \; B_x \; + \; D_x$$

codiert.

Die Komplexität des Sicherheitsprogramms ist insbesondere abhängig von der Absicherung gegen Fehler im dynamischen Verhalten des Sicherheitsprogramms.

Typische Absicherungsmaßnahmen sind:

    1. Dynamische Signatur $D_x$
    2. Tracer (Tracer-Variable)
    3. Propagationsvariable

Die Erfassung einer neuen Information in einer dieser Signaturen erfolgt typisch so, dass entweder eine Konstante oder eine Variable mit eindeutiger Erwartungshaltung addiert wird. Mischformen sind möglich. Beispielsweise kann die Tracer-Variable, deren Hauptzweck klassischer Weise die Protokollierung der durchlaufenen linearen Programmblöcke ist, gleichzeitig zur Propagation von Fehlerinformationen oder Zustandsinformationen (z.B. Ereignisse oder "Kriterien") verwendet werden.

Für die vollständige Absicherung ist häufig die gleichzeitige Änderung mehrerer unabhängiger Aspekte nötig. Diese Gleichzeitigkeit muss auch im kompilierten Programmcode gesichert sein, wobei man also berücksichtigen muss, dass Compiler Optimierungen vornehmen können, die im Allgemeinen für den Programmablauf vorteilhaft sind, aber andererseits nicht garantieren, dass Anweisungen, die im Source-Code zusammenhängend programmiert sind, im ausführbaren Programm tatsächlich zeitnah oder quasi-zeitgleich ausgeführt werden. Hierzu wird aktuell für jedes Problem eine eigene Lösung gesucht.

Die Absicherung bzw. sicherheitsgerichtete Protokollierung von Ereignissen oder Kriterien (Zustandsinformationen, Zustandsänderungen, Trace-Informationen etc.) erfolgt analog zur bekannten arithmetischen Kodierung. Innerhalb einer Tracer-Variablen werden mehrere Kriterien $K_1 \ldots K_n$ unabhängig gespeichert. Für jedes Kriterium $K_i$ ist der Wert arithmetisch kodiert in $Tracer_c$ gespeichert.

In einer ersten Variante werden die Kriterien kodiert abgebildet. Das bedeutet, dass die arithmetisch im codierten Raum gebildete Summe die zu protokollierenden Informationen als codierter Wert der Tracer-Variablen, also als "payload", gespeichert werden:

$$Tracer_c \; = \; A^i \star K_i \; + \; B_{Tracer} \; + \; D_{Tracer,i}$$

Die vollständige Formel für eine Anzahl i von Kriterien lautet:

$$Tracer_c \; = \; \left( \textstyle\sum_{i=1}^{n} A^i \star K_i \right) \; + \; B_{Tracer} \; + \; D_{Tracer}$$

Wie man sieht, gilt:

$$D_{Tracer,i} \; = \; D_{Tracer} \; + \; \left( \textstyle\sum_{j=1}^{i} A^j \star K_j \right) \; + \; \left( \textstyle\sum_{j=i+1}^{n} A^j \star K_j \right)$$

Wenn nun gleichzeitig $K_i$ um $\Delta K_i$ und $K_j$ um $\Delta K_j$ geändert werden soll, dann ergibt dies eine Änderung von

$$\Delta Tracer \; = \; \Delta K_i \; \star \; A^i \; + \; \Delta K_j \; \star \; A^j.$$

Im Programm wird nun

$$Tracer_c \; = \; Tracer_c \; + \; \Delta Tracer$$

ausgeführt. In vielen Fällen handelt es sich bei $\Delta K_i$ und $\Delta K_j$ um Konstanten. In diesen Fällen ist auch $\Delta Tracer$ eine Konstante. Wenn ein Wert $\Delta K_i$ mit eindeutiger Erwartungshaltung $\Delta K_i^{erwartet}$ addiert werden soll, dann erfolgt dies durch die allgemeingültige Form:

$$\Delta Tracer = n*\Delta K_i + \Delta K_i^{erwartet} * (A^i - n) + \Delta K_j + m*\Delta K_j^{erwartet} * (A^j - m)$$

Dabei werden n und m so gewählt, dass die Fehlerinformation, die durch die Kriterien definiert wird, sicher übertragen wird. Sonst gibt es keine Einschränkungen für die Wahl von n und m.

In einer zweiten Variante bilden die Kriterien die Signatur eines kodierten Wertes, werden also vorzugsweise in der dynamischen Signatur der Tracer-Variablen abgebildet:

$$Tracer_c = A_i*X + B_i + K_i$$

Für jedes Kriterium wird eine Konstante $E_i$ bestimmt, die den Wert 1 für dieses Kriterium darstellt:

- $E_i \text{ MOD } A_i = 1$
- $E_i \text{ MOD } A_j = 0$ falls $i \neq j$

Wenn nun gleichzeitig $K_i$ um $\Delta K_i$ und $K_j$ um $\Delta K_j$ geändert werden soll, dann ergibt dies eine Änderung von

$$\Delta Tracer = \Delta K_i * E_i + \Delta K_j * E_j.$$

Im Programm wird nun $Tracer_c = Tracer_c + \Delta Tracer$ ausgeführt.

In vielen Fällen handelt es sich bei $\Delta K_i$ und $\Delta K_j$ um Konstanten. In diesen Fällen ist auch $\Delta Tracer$ eine Konstante. Wenn ein Wert $\Delta K_i$ mit eindeutiger Erwartungshaltung $\Delta K_i^{erwartet}$ addiert werden soll, dann erfolgt dies durch die allgemeingültige Form:

$$\Delta Tracer = n*\Delta K_i + \Delta K_i^{erwartet} * (E_i - n) + \Delta K_j + m*\Delta K_j^{erwartet} * (E_j - m)$$

Dabei werden n und m wieder so gewählt, dass die Fehlerinformation, die durch die Kriterien definiert wird, sicher übertragen wird. Sonst gibt es keine Einschränkungen für die Wahl von n und m.

In beiden Varianten kann nach dem Addieren eines $\Delta Tracer$ eine zusätzliche Korrektur erfolgen, um systematische Fehler zu vermeiden. Beispielsweise können mit modulo-Operationen Überläufe vermieden bzw. "entfernt" werden, die durch die mehrmalige Addition von Informationen im codierten Bereich auftreten können.

Welche Kriterien konkret benötigt werden, ist nicht Teil dieser Erfindung. Diese ergeben sich aus den Sicherheitsanforderungen im konkreten Anwendungsfall. Typische Kriterien (oder allgemein: Ereignisse) sind:

- Der Prgrammlauf ist korrekt: Dies kann mit einem Automaten mit einem Zustand je Basicblock geprüft werden.

- Der Wertverlauf der Ablaufbedingungen muss dem tatsächlichen Ablauf entsprechen.

- Zeitstempel bzw. dynamische Signatur für die Daten

- Prüfsignatur für eine Bedienung.

Der wesentliche Vorteil liegt in der gleichzeitigen Verarbeitung mehrerer unabhängiger Konsistenzkriterien zur Erfassung und Propagation von Fehlern. Durch die Gleichzeitigkeit werden viele dynamische Effekte bei der Erfassung und Propagation von Fehlern vermieden. Dies ermöglicht die notwendige Reduktion der Komplexität von Sicherheitsprogrammen.

In der Figur ist der Ablauf der kodierten Operation zu

$$x_f := x_f + 1$$

dargestellt, wobei im rechten Teil der Figur die eigentliche Operation und im linken Teil der Figur die Protokollierung in der Tracer-Variablen dargestellt ist.

Folgende Werte werden festgelegt:

$A = 13$ und $R = 7$;
$K_A = (\sum D_x) \bmod A = 4$ und $K_R = D_{Tracer} = 10$;
$\Delta K_A = 5$ und $\Delta K_R = 3$

Variante Modulare Kodierung:

$D_{Tracer} \bmod 7 = 10 \bmod 7 = 3$
$E_A = 14$ und $E_R = 78$

$$\texttt{Tracer}_\texttt{c} = (4*78 + 3*14) \bmod (7*13) = 17$$

$$
\begin{aligned}
\Delta\texttt{Tracer} \quad &= (\Delta K_A * E_A + \Delta K_R * E_R) \bmod A*R \\
&= (5*14 + 3*78) \bmod 91 \\
&= 31
\end{aligned}
$$

Es gilt:

$$(\texttt{Tracer}_\texttt{c} + \Delta\texttt{Tracer}) \bmod A = (K_A + \Delta K_A) \bmod A = 48 \bmod 13 = 9$$

$$(\texttt{Tracer}_\texttt{c} + \Delta\texttt{Tracer}) \bmod R = (K_R + \Delta K_R) \bmod R = 48 \bmod 7 = 6$$

Variante ANBD-Codiert:

$$\texttt{Tracer}_\texttt{c} = ((\sum D_x) \bmod A)*A^2 + (D_{Tracer} \bmod A)*A + B_{Tracer} + D_{Programm}$$

Für die Erfindung sind $B_{Tracer}$ und $D_{Programm}$ nicht relevant und werden daher auf 0 gesetzt.

$$\rightarrow \quad \texttt{Tracer}_\texttt{c} = 4*169+10*13 = 806$$

$E_A = 13^2 = 169$ und $E_R = 13$

$$
\begin{aligned}
\Delta\texttt{Tracer} \quad &= \Delta K_A * E_A + \Delta K_R * E_R \\
&= 5*169 + 3*13 \\
&= 884
\end{aligned}
$$

Da $K_R + \Delta K_R \geq 13$ muss für $K_R$ der Überlauf behandelt werden. Es muss $E_R * A = 169$ abgezogen werden.

$$\rightarrow \quad \Delta\texttt{Tracer} = 715!$$

Es gilt:

$$((\texttt{Tracer}_\texttt{c} + \Delta\texttt{Tracer}) / A^2) \bmod A = (K_A + \Delta K_A) \bmod A = 9$$

$$((\texttt{Tracer}_\texttt{c} + \Delta\texttt{Tracer}) \ / \ \texttt{A}) \ \texttt{mod A} = (\texttt{K}_\texttt{R} + \Delta\texttt{K}_\texttt{R}) \ \texttt{mod A} = 0$$

In der arithmetischen (codierten) Addition von 1 zu $x_f$ wird die Zahl 1 durch 1*A repräsentiert, so dass zu $x_c$ 1*A (= A) und zu der bisherigen dynamischen Signatur von $x_c$ die Signatur der codierten 1 (nämlich $K_A$) addiert wird.

Das erste Kriterium ist also durch die korrekte Addition gegeben, wodurch die Tracer-Variable $D_{Tracer}$ um den entsprechenden vorher für eine korrekte Addition vorgesehenen Wert $\Delta K_A = 5$ ergänzt wird.

Das zweite Kriterium ist z.B. eine dynamische Signatur (D-Signatur) und dient der Prüfung der korrekten Ablaufreihenfolge. Im vorliegenden Fall wird dazu gemäß vorheriger Festlegung ($\Delta K_R = 3$) also die Zahl 3 zu $D_{Tracer}$ addiert.

Beide Änderungen müssen jedoch arithmetisch erfolgen; d.h., dass $\Delta K_A = 5$ und $\Delta K_R = 3$ in codierter Form zur Tracer-Variablen "addiert" werden müssen.

Daraus ergeben sich:

$E_A = 14$ und $E_R = 78$

$$\Delta\texttt{Tracer} = (5*14 + 3*78) \ \texttt{mod} \ (7*13) = 304 \ \texttt{mod} \ 91 = 31$$

Durch Addition der 31 zum ursprünglichen Wert 17 der Tracer-Variablen $Tracer_c$ werden also zeitgleich, also in einem auch durch den Compiler oder Interrupts untrennbaren Schritt beide Kriterien in der Tracer-Variablen protokolliert.

Eine Konsistenzprüfung kann dann am Programmende erfolgen; dies ist im letzten Block auf der linken Seite der Figur dargestellt. Eine Möglichkeit besteht darin, durch modulo-Operationen die einzelnen Bestandteile wiederzugewinnen:

- $Tracer_c \ \text{mod} \ A = 9$
- $Tracer_c \ \text{mod} \ R = 6$

Diese können dann mit Erwartungswerten vergleichen werden.

- $(Tracer_c - D_{Tracer}) \ \text{mod} \ R = 0$
- $Tracer_c \ \text{MOD} \ A = (\sum D_x) \ \text{MOD} \ A$

Zur Vermeidung/Beherrschung von Überläufen kann Wert vom Tracer z.B. durch $Tracer_c := Tracer_c \ \text{MOD} \ A*R$ begrenzt werden. Die sichere Berechnung von $D_{Tracer}$ erfolgt nach bekannten Verfahren im Coded Processing. Bei der Bildung von $D_{Tracer}$ gehen dabei alle ablaufrelevanten Bedingungen direkt ein.

Nach einem negativen Resultat der Konsistenzprüfung kann eine entsprechende vorprogrammierte Reaktion bzw. Fehlerbehandluchg erfolgen. In einem einfachen Fall wird dabei das zugrunde liegende System in einen sicheren Zustand überführt (z.B. Not-Aus) und/oder eine Warnmeldung ausgegeben.

**Patentansprüche**

1. Verfahren zur Protokollierung einer Vielzahl von Ereignissen in einer codierten Tracer-Variablen ($Tracer_c$) in einem sicherheitsgerichteten Computerprogramm,
   wobei jedes Ereignis als ein Wert in der codierten Tracer-Variable ($Tracer_c$) protokolliert wird,
   **dadurch gekennzeichnet,**
   **dass** für eine gleichzeitige Protokollierung mehrerer Ereignisse aus den Werten für diese Ereignisse zuerst ein Gesamtwert errechnet wird, der danach in der codierten Tracer-Variable ($Tracer_c$) protokolliert wird.

2. Verfahren nach Patentanspruch 1 oder 2,
   **dadurch gekennzeichnet,**
   **dass** zur Codierung der codierten Tracer-Variablen ($Tracer_c$) eine AN-, ANB-, oder ANBD-Codierung verwendet wird.

3. Verfahren nach einem der vorhergehenden Patentansprüche,
   **dadurch gekennzeichnet,**
   **dass** die Ereignisse als codierter Wert in der codierten Tracer-Variable ($Tracer_c$) protokolliert werden.

4. Verfahren nach einem der vorhergehenden Patentansprüche,

**dadurch gekennzeichnet,**
**dass** die Ereignisse in einer Signatur der codierten Tracer-Variable (Tracer$_c$) protokolliert werden.

5. Verfahren nach einem der vorhergehenden Patentansprüche,
**dadurch gekennzeichnet,**
**dass** für jedes Ereignis oder für jeden Typ eines Ereignisses eine Konstante (A; R) definiert wird, wobei diese Konstante (A; R) den Wert für das Zutreffen des Ereignisses darstellt.

6. Verfahren nach Patentanspruch 5,
**dadurch gekennzeichnet,**
**dass** die Konstanten (A; R) der verschiedenen Ereignisse bzw. der verschiedenen Typen zueinander teilerfremd gewählt werden.

7. Verfahren nach einem der vorhergehenden Patentansprüche,
**dadurch gekennzeichnet,**
**dass** durch das Computerprogramm eine Konsistenzprüfung der Tracer-Variablen (Tracer$_c$) durchgeführt wird, wobei zumindest im Falle einer Inkonsistenz eine Fehlerbehandlung durchgeführt wird.

8. Verfahren nach einem der vorhergehenden Patentansprüche,
**dadurch gekennzeichnet,**
**dass** mit dem Ereignis jeweils ein Erwartungswert ($\Delta K_A$; $\Delta K_R$) für das Ereignis in der codierten Tracer-Variable (Tracer$_c$) protokolliert wird.

9. Einrichtung zur Protokollierung einer Vielzahl von Ereignissen in einer codierten Tracer-Variablen (Tracer$_c$) in einem sicherheitsgerichteten Computerprogramm,
**dadurch gekennzeichnet,**
**dass** die Einrichtung zur Durchführung des Verfahrens gemäß Patentanspruch 1 eingerichtet ist.

10. Computerprogrammprodukt zur Protokollierung einer Vielzahl von Ereignissen in einer codierten Tracer-Variablen (Tracer$_c$) in einem sicherheitsgerichteten Computerprogramm,
wobei das Computerprogrammprodukt derart eingerichtet ist, dass bei einer Ausführung auf einer Einrichtung, insbesondere auf einem Computer oder auf einer industriellen Automatisierungskomponente, das Verfahren gemäß Patentanspruch 1 ausgeführt wird.

$$x_f := x_f + 1$$

| |
|---|
| $Tracer_C = 17$<br>$Tracer_C \bmod A = 4$<br>$Tracer_C \bmod R = 3$ |

| |
|---|
| $xc = xf1 * A + Bx + Dx$ |

| |
|---|
| $1_C$ |

| |
|---|
| $Tracer_C = Tracer_C + 31 = 48$ |

| |
|---|
| $+_C$<br>$x_C := x_C + A + K_A$<br>$D_X := D_X + K_A$ |

| |
|---|
| $Tracer_C \bmod A = 9$<br>$Tracer_C \bmod R = 6$ |

Europäisches Patentamt
European Patent Office
Office européen des brevets

## EUROPÄISCHER RECHERCHENBERICHT

Nummer der Anmeldung

EP 20 19 9047

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 117971 A1 (TECHNISCHE UNIVERSITÄT DRESDEN [DE]) 9. Juni 2016 (2016-06-09) * Absatz [0011] - Absatz [0038] * * Absatz [0148] - Absatz [0179] * ----- | 1-10 | INV. G06F21/52 G06F11/07 |
| A | DE 10 2010 037457 A1 (UNIV DRESDEN TECH [DE]) 15. März 2012 (2012-03-15) * Absatz [0157] - Absatz [0187] * ----- | 1-10 | |
| A | DE 10 2013 218269 A1 (BECKHOFF AUTOMATION GMBH [DE]) 12. März 2015 (2015-03-12) * Absatz [0025] - Absatz [0050] * ----- | 1-10 | |

RECHERCHIERTE SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| München | 9. März 2021 | Tenbieg, Christoph |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 9047

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2021

| Im Recherchenbericht angeführtes Patentdokument | Datum der Veröffentlichung | Mitglied(er) der Patentfamilie | Datum der Veröffentlichung |
|---|---|---|---|
| DE 102014117971 A1 | 09-06-2016 | DE 102014117971 A1<br>WO 2016087652 A1 | 09-06-2016<br>09-06-2016 |
| DE 102010037457 A1 | 15-03-2012 | DE 102010037457 A1<br>EP 2614438 A1<br>KR 20130105656 A<br>US 2013262938 A1<br>WO 2012032140 A1 | 15-03-2012<br>17-07-2013<br>25-09-2013<br>03-10-2013<br>15-03-2012 |
| DE 102013218269 A1 | 12-03-2015 | KEINE | |

Für nähere Einzelheiten zu diesem Anhang : siehe Amtsblatt des Europäischen Patentamts, Nr.12/82

EPO FORM P0461